# EUROPÄISCHE PATENTSCHRIFT

(11) **EP 2 109 346 B1**
(45) Veröffentlichungstag und Bekanntmachung des Hinweises auf die Patenterteilung: **30.07.2014**
(21) Anmeldenummer: 08290349.3
(22) Anmeldetag: 09.04.2008
(51) Int. Cl.: H05B 3/50, H05B 1/02, B60H 1/22

(54) **Elektrische Vorrichtung zum Heizen, insbesondere einer Fahrgastzelle eines Kraftfahrzeuges**
Electrical device for heating, in particular an interior of a motor vehicle
Dispositif électrique destiné à chauffer, en particulier une cellule passager d'un véhicule automobile

(43) Veröffentlichungstag der Anmeldung: 14.10.2009
(73) Patentinhaber: Behr France Rouffach SAS, 68250 Rouffach (FR)
(72) Erfinder: Gautsch, Laurent, 67600 Mussig (FR)
(74) Vertreter: Grauel, Andreas

(56) Entgegenhaltungen:
- EP-A- 1 157 868
- EP-A- 1 353 131
- EP-A- 1 452 357
- EP-A- 1 643 805
- WO-A-03/086018
- FR-A- 2 858 166
- US-A1- 2007 084 858

## Beschreibung

Die Erfindung betrifft eine elektrische Vorrichtung zum Heizen, insbesondere einer Fahrgastzelle eines Kraftfahrzeuges, mit elektrischen Heizelementen und mit einer Regeleinrichtung, wobei die Regeleinrichtung ein Gehäuse und elektrische Anschlussmittel aufweist.

Gattungsgemäße elektrische Heizvorrichtungen sind aus dem Stand der Technik gut bekannt und werden beispielsweise im Kraftfahrzeugwesen oftmals als Zusatzheizer zu einer regulären Fahrgastzellenheizung eingesetzt. Hierbei können sie insbesondere in einer Startphase eines Kraftfahrzeuges aktiviert werden, wenn die reguläre Fahrgastzellenheizung mittels einer Wärme aus einem Kühlmittelkreislauf einer Brennkraftmaschine des Kraftfahrzeuges noch nicht ausreichend versorgt werden kann. Vorteilhafter Weise können die elektrischen Heizvorrichtungen in einer solchen Startphase die Fahrgastzelle des Kraftfahrzeuges frühzeitig beheizen. Dies ist besonders bei sehr kalten Außentemperaturen von Vorteil, um beispielsweise auch vereiste Scheiben des Kraftfahrzeuges schnell eisfrei zu bekommen.

Um die elektrischen Heizvorrichtungen hinsichtlich Ihres Heizeinsatzes besonders gut regeln zu können, verfügen viele solcher elektrischen Heizvorrichtungen bereits über eigene Regeleinrichtungen, mittels welcher idealerweise auch die Heizcharakteristik einer elektrischen Heizvorrichtung individuell einstellbar ist. Somit unterschieden sich die elektrischen Heizvorrichtungen mit einer Regeleinrichtung von elektrischen Heizeinrichtungen ohne Regeleinrichtung, bei welchen die elektrischen Heizelemente dann meist nur ein- oder ausgeschaltet werden können.

Ein Beispiel für eine elektrische Heizvorrichtung ohne eine solche Regeleinrichtung ist in der europäischen Patentanmeldung EP 1 580 495 A1 gezeigt. Hier sind elektrische Anschlusskabel direkt an einem elektrischen Anschlussterminal angeschlossen, wobei der elektrische Anschlusstemlinal mit elektrischen Anschlüssen der dort verbauten elektrischen Heizelemente verbunden ist. Alle anschlussseitigen elektrischen Bauteile werden von einer isolierenden Abdeckung umgeben und sind somit vor einem versehentlichen Zugriff geschützt, wobei die isolierende Abdeckung Durchführungen aufweist, durch welche hindurch die elektrischen Anschlusskabel geführt werden können.

Aus der europäischen Patentanmeldung EP 1 691 579 A1 ist eine elektrische Heizvorrichtung, insbesondere für den Einsatz in Kraftfahrzeugen, bekannt, welche mit einer Steuereinrichtung ausgestattet ist, die kostengünsti-ge Relais umfasst, mittels welchen wärmeerzeugende Elemente der elektrischen Heizvorrichtung gesteuert werden können. Die Steuereinrichtung weist elektrische Kontaktelemente auf, die von einem Steckergehäuse umgeben sind. Das Steckergehäuse stellt Steckeraufnahmen für elektrische Anschlusskabel bereit, die von außen in die jeweiligen Steckeraufnahmen eingesteckt werden können. Das Steckergehäuse baut hier jedoch sehr groß, so dass die elektrische Heizvorrichtung insgesamt sehr viel Bauraum erfordert.

Wie beschrieben, wird das Vorsehen diesbezüglicher Regeleinrichtungen an elektrischen Heizvorrichtungen nahezu immer mit einem zusätzlichen Bauraumbedarf erkauft. Es ist jedoch nahezu immer gefordert, derartige elektrische Heizvorrichtungen möglichst kompakt und leicht zu bauen. Beispielsweise um sie problemlos unmittelbar vor einer Lüftungsaustrittsöffnung einer Fahrgastzelle integrieren zu können.

Es ist Aufgabe vorliegender Erfindung, gattungsgemäße elektrische Heizvorrichtungen weiter zu entwickeln, so dass insbesondere mit einer Regeleinrichtung ausgestattete elektrische Heizvorrichtungen noch kompakter bereit gestellt werden können.

Die Aufgabe der Erfindung wird von einer elektrischen Vorrichtung zum Heizen, insbesondere einer Fahrgastzelle eines Kraftfahrzeuges, mit elektrischen Heizelementen und mit einer Regeleinrichtung gelöst, wobei die Regeleinrichtung ein Gehäuse und elektrische Anschlussmittel aufweist, und wobei die elektrischen Anschlussmittel an einer den elektrischen Heizelementen zugewandten Gehäuseseite der Regeleinrichtung angeordnet sind.

Erfindungsgemäß sind die elektrischen Anschlussmittel der Regeleinrichtung und damit vorzugsweise auch der gesamten elektrischen Heizvorrichtung nicht mehr an einer Außenseite der Regeleinrichtung der elektrischen Heizvorrichtung platziert. Vielmehr befinden sich die elektrischen Anschlussmittel vorliegend innerhalb eines Bauvolumens, welches die elektrische Heizvorrichtung einnimmt. Vorteilhafter Weise kann hierbei bereits vorhandener, aber bisher ungenutzter Bauraum innerhalb des Heizvorrichtungsbauvolumens genutzt werden, um die elektrischen Anschlussmittel besonders platzsparend an der elektrischen Heizvorrichtung zu realisieren. Hierdurch wird die vorliegende Heizvorrichtung sehr kompakt und kann trotz vorhandener Regeleinrichtung selbst unter räumlich beengten Bedingungen verbaut werden.

Vorliegend kann als elektrische Heizvorrichtung jeglicher Wärmeübertrager verwendet werden, mittels welchem vor allem Luft erwärmt werden kann, die insbesondere zum Beheizen einer Fahrgastzelle eines Kraftfahrzeuges verwendet wird. Insofern bezieht sich die vorliegende elektrische Heizvorrichtung im Speziellen auf elektrische Heizvorrichtungen, welche im Bereich des Kraftfahrzeugwesens in Kraftfahrzeugen eingesetzt werden.

Als elektrische Heizelemente können nahezu jegliche Heizquellen eingesetzt werden, mittels welchen elektrische Energie in Wärmeenergie umgewandelt werden können, wobei die Wärmeenergie in erster Linie zum Beheizen einer Fahrgastzelle eingesetzt werden kann. Insbesondere eignen sich hierbei elektrische Heizelemente mit PTC-Elementen, die es konstruktiv einfach ermöglichen, eine gewünschte Heiztemperatur in etwa konstant zu halten. Deshalb sieht eine bevorzugte Ausführungsvariante auch vor, dass die elektrischen Heizelemente elektrische PTC-Elemente umfassen. Da derartige PTC-Elemente auch im Bereich von Kraftfahrzeugheizungen gut bekannt sind, wird auf deren Aufbau und Funktionsweise vorliegend nicht weiter eingegangen. Die elektrischen Heizelemente sind vorzugsweise in einem Rahmen der elektrischen Heizvorrichtung eingelegt, so dass sie betriebssicher an der Heizvorrichtung gehalten werden können.

Der Begriff "Regeleinrichtung" beschreibt hierbei jegliche Einrichtungen, mittels welcher elektrische Heizvorrichtungen, insbesondere deren Heizelemente, vorzugsweise individuell und unabhängig von einer übergeordneten Steuerung einer regulären Fahrgastzellenheizung in ihrem Heizverhalten beeinfiusst werden können. Vorzugsweise werden der Regeleinrichtung hierzu elektrische Signale bezüglich ermittelter Ist-Werte übermittelt, beispielsweise hinsichtlich einer Innenraumtemperatur einer Fahrgastzelle oder eines möglichen Heizvermögens der regulären Fahrgastzellenheizung. Um die Umgebung der Regeleinrichtung vor einem Kontakt mit elektrisch leitenden Komponenten der elektrischen Heizeinrichtung schützen zu können, weist die Regeleinrichtung ein elektrisch isolierendes Gehäuse auf.

Der Begriff "elektrische Anschlussmittel" erfasst vorliegend jegliche Gebilde, mittels welcher ein betriebssicheres elektrisches Anschließen einer elelctrischen Heizvorrichtung an einer Energiequelle ermöglicht werden kann. Somit ist klar, dass es sich bei den elektrischen Anschlussmitteln um elektrische Anschlüsse elektrischer Hauptenergieversorgungsleitungen der elektrischen Heizvorrichtung handelt, die sich von übrigen elektrischen Steckern, etwa für Steuerströme usw., eindeutig abgrenzen und unterscheiden. In einem einfachsten Fall können die elektrischen Anschlussmittel hierzu lediglich Anschlusspole umfassen, an welche elektrische Anschlusskabel angelötet werden können.

In diesem Zusammenhang sieht eine vorteilhafte Ausführungsvariante vor, dass die elektrischen Anschlussmittel an einer Gehäuseinnenseite der elektrischen Heizvorrichtung angeordnet sind. Somit können die elektrischen Anschlussmittel gut in die elektrische Heizvorrichtung integriert werden.

Sind die elektrischen Anschlussmittel an einer den elektrischen Heizelementen zugewandten Seite einer elektrischen Anschlussplatte angeordnet, können die elektrischen Anschlussmittel konstruktiv besonders einfach in die elektrisch leitenden Komponenten der elektrischen Heizvorrichtung eingegliedert werden.

Mit einer "elektrischen Anschlussplatte" können vorliegend jegliche Gebilde erfasst werden, mittels welchen mehrere Kontaktelemente elektrisch mit den elektrischen Anschlussmitteln verbunden werden können. Über derartige Kontaktelemente kann die Regeleinrichtung an die elektrischen Heizelemente elektrisch angeschlossen werden.

Baulich sehr kompakt können die elektrischen Anschlussmittel realisiert werden, wenn die elektrischen Anschlussmittel elektrische Anschlusspole umfassen, welche auf die elektrischen Heizelemente zugerichtet sind.

Elektrische Anschlusskabel können besonders einfach an die elektrische Heizeinrichtung angeschlossen werden, wenn die elektrischen Anschlussmittel elektrische Anschlussstecker umfassen.

Sind die elektrischen Anschlussmittel innerhalb einer Führungseinrichtung der Regeleinrichtung angeordnet, lassen sich die elektrischen Anschlussmittel auch sehr platzsparend in das Gehäuse der Regeleinrichtung einfügen.

Der Begriff "Führungseinrichtung" beschreibt im Wesentlichen Einrichtungen, mittels welchen die Regeleinrichtung zumindest bei einem Montieren an den Rahmen der elektrischen Heizvorrichtung vorteilhaft geführt werden kann, so dass die Montage gut und schnell durchführbar ist. Idealerweise ist die Führungseinrichtung ein Bestandteil des Regeleinrichtungsgehäuses.

Um die elektrischen Anschlusskabel besonders einfach zu den elektrischen Anschlussmittein führen zu können, ist es vorteilhaft, wenn das Gehäuse der Regeleinrichtung einen radial zugänglichen Kabelkanal aufweist.

Ein derartig radial zugänglicher Kabelkanal ist konstruktiv gut umsetzbar, wenn das Gehäuse der Regeleinrichtung eine Führungsschale für ein elektrisches Anschlusskabel aufweist. In diese Führungsschale kann das elektrische Anschlusskabel problemlos eingelegt werden.

Weitere Vorteile, Ziele und Eigenschaften vorliegender Erfindung werden anhand nachfolgender Beschreibung anliegender Zeichnungen erläutert, in welcher beispielhaft eine elektrische Heizvorrichtung mit elektrischen Anschlussmitteln dargestellt ist, bei welcher die elektrischen Anschlussmittel an einer den elektrischen Heizelementen zugewandten Gehäuseseite einer Regeleinrichtung angeordnet sind.

Es zeigt
- Figur 1: schematisch eine perspektivische Ansicht einer erfindungsgemäßen elektrischen Heizvorrichtung mit einer Regeleinrichtung mit elektri- schen Anschlussmitteln, welche elektrischen Heizelementen der elektrischen Heizvorrichtung zugewandt sind,
- Figur 2: schematisch eine Ansicht eines Gehäuses der Regeleinrichtung der elektrischen Heizvorrichtung,
- Figur 3: schematisch eine Detailansicht eines ersten elektrischen An- schlussmittels der Regeleinrichtung, und
- Figur 4: schematisch einen Querschnitt des Gehäuses der Regeleinrichtung in Höhe des ersten elektrischen Anschlussmittels aus der Figur 3.

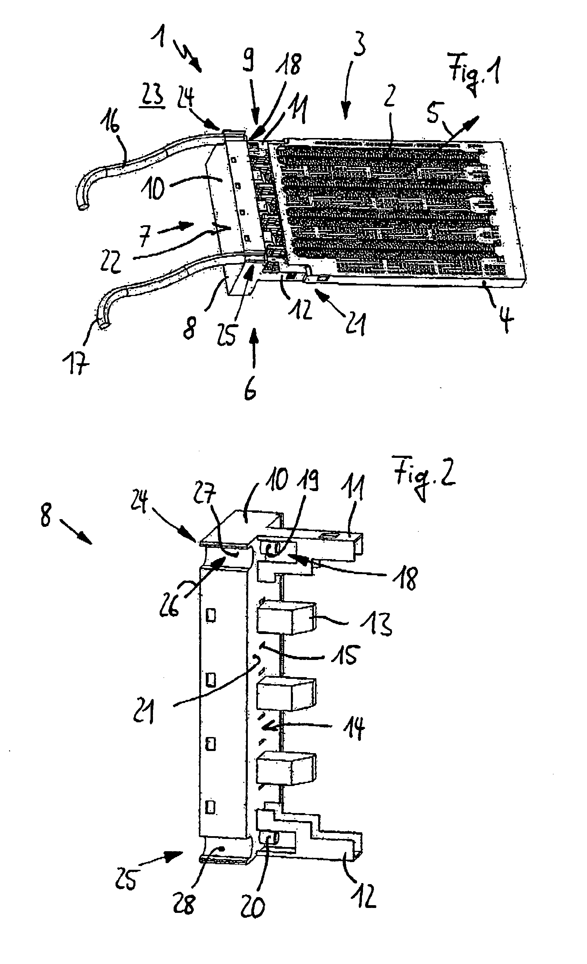

Die in der Figur 1 gezeigte elektrische Heizvorrichtung 1 kann beispielsweise in einem Belüftungskanal (hier nicht gezeigt) eines Kraftfahrzeuges als zusätzlicher Zuheizer eingesetzt werden.

Die elektrische Heizvorrichtung 1 weist für eine diesbezügliche Wärmeerzeugung in bekannter Weise elektrische PTC-Heizelemente 2 als elektrische Heizelemente 3 der elektrischen Heizvorrichtung 1 auf. Die PTC-Heizelemente 2 sind in einem Rahmen 4 der elektrischen Heizvorrichtung 1 fest aber lösbar eingelegt, so dass sie betriebssicher und dauerhaft an der elektrischen Heizvorrichtung 1 befestigt sind. Die PTC-Heizelemente 2 können bei ordnungsgemäßer Montage der elektrischen Heizvorrichtung 1 von einem Luftstrom 5 durch- bzw. umströmt werden, wobei die mittels der elektrischen PTC-Heizelemente 2 erzeugte Wärme von dem Luftstrom 5 aufgenommen und in eine Fahrgastzelle des Kraftfahrzeuges überführt werden kann.

An einer Kopfseite 6 der elektrischen Heizvorrichtung 1 befindet sich eine Regeleinrichtung 7, mittels welcher insbesondere die elektrischen PTC-Heizelemente 2 hinsichtlich ihres Heizverhaltens geregelt werden können.

Die Regeleinrichtung 7 ist in diesem Ausführungsbeispiel als ein eigenständiges Bauteil 8 (siehe insbesondere Figur 2) konzipiert, welches in einem Steckbereich 9 an den Rahmen 4 angesteckt werden kann.

Die Regeleinrichtung 7 weist ein Gehäuse 10 auf, mittels welchem eine erste Führungseinrichtung 11 und eine zweite Führungseinrichtung 12 sowie Kontaktblechabstandshalter 13 (hier nur exemplarisch beziffert) gebildet sind. Die Führungseinrichtungen 11, 12 und die Kontaktblechabstandshalter 13 sind an einer den elektrischen PTC-Heizelementen 2 zugewandten Gehäuseseite 14 vorgesehen, so dass die Regeleinrichtung 7 vorteilhaft an den Rahmen 4 heran geführt und befestigt werden kann. An der Gehäuseseite 14 sind zudem noch Kontaktschlitze 15 (hier nur exemplarisch beziffert) vorgesehen, in welche Kontaktbleche (hier nicht gezeigt) der PTC-Heizelemente 2 eingesteckt werden können, so dass die PTC-Heizelemente 2 mit der Regeleinrichtung 7 elektrisch verbunden sind.

Um die elektrische Heizvorrichtung 1 mit elektrischer Energie versorgen zu können, sind an der elektrischen Heizvorrichtung 1 ein erstes elektrisches Anschlusskabel 16 und ein zweites elektrisches Anschlusskabel 17 vorgesehen und sind hierbei an elektrischen Anschlussmitteln 18 (nur hinsichtlich des ersten elektrischen Anschlusskabels 16 beziffert) der Regeleinrichtung 7 elektrisch angeschlossen. Die elektrischen Anschlussmittel 18 umfassen einen ersten elektrischen Anschlussstecker 19 und einen zweiten elektrischen Anschlussstecker 20, welche im ordnungsgemäß montierten Zustand der Regeleinrichtung 7 auf die elektrischen Heizelemente 3 der elektrischen Heizvorrichtung zugerichtet sind. Hierdurch können die elektrischen Anschlusskabel16 und 17 besonders einfach insbesondere auf Anschlusspole der elektrischen Anschlussstecker 19 bzw. 20 aufgesteckt werden.

Um die elektrischen Anschlussmittel 18 möglichst platzsparend an der elektrischen Heizeinrichtung 1 zu realisieren, sind die elektrischen Anschlussmittel 18 ebenfalls an der den elektrischen PTC-Heizelementen 2 zugewandten Gehäuseseite 14 angeordnet, insofern sind sie innerhalb eines Volumens der elektrischen Heizvorrichtung 1 platziert. Somit sind die elektrischen Anschlussmittel 18 an einer Gehäuseinnenseite 21 der elektrischen Heizvorrichtung 1 angeordnet und nicht an einer Gehäuseaußenseite 22, beispielsweise der Regeleinrichtung 7, wie bisher im Stand der Technik praktiziert. Zudem sind die elektrischen Anschlussmittel 18 hierdurch auch besonders gut von äußeren Einflüssen geschützt. Vorteilhafter Weise sind die Anschlussmittel 18 darüber hinaus in den beiden Führungseinrichtungen 11 bzw. 12 des Regeleinrichtungsgehäuses 10 eingelassen, so dass sie allein hierdurch schon keinen zusätzlichen Bauraum innerhalb der elektrischen Heizvorrichtung 1 einnehmen.

Die beiden elektrischen Anschlusskabel 16 und 17 können konstruktiv besonders einfach von Außen 23 an die Gehäuseinnenseite 21 geführt werden, da das Gehäuse 10 für jedes der elektrischen Anschlusskabel 16, 17 einen radial zugänglichen Kabelkanal 24 bzw. 25 aufweist. In die radial zugänglichen Kabelkanäle 24, 25 können die elektrischen Anschlusskabel 16, 17 gemäß Pfeilrichtung 26 radial in den jeweiligen Kabelkanal 24, 25 eingelegt werden. Vorliegend sind die beiden Kabelkanäle 24 und 25 jeweils mit einer Führungsschale 27 bzw. 28 an der schmalen Außenseite des Regeleinrichtungsgehäuses 10 ausgestattet, so dass sich die elektrischen Anschlusskabel 16 und 17 besonders gut an der schmalen Außenseite in das Gehäuse 10 der Regeleinrichtung 7 einfügen können. Insbesondere entfällt mittels der Führungsschalen 27, 28 vorteilhafter Weise ein unter Umständen fummeliges Einführen der elektrischen Anschlusskabel 16, 17 durch eine runde, radial geschlossene Kabeldurchführung.

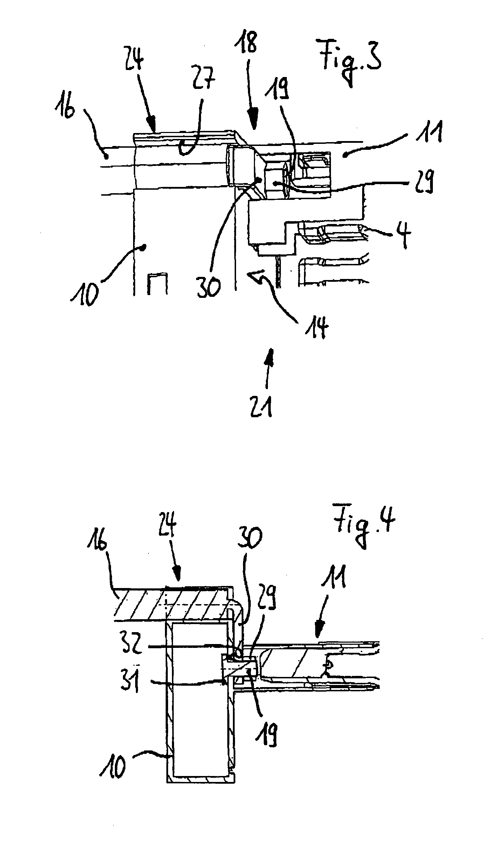

Um die elektrischen Anschlusskabel 16 bzw. 17 dauerhaft mit den elektrischen Anschlussmittein 18 sicher verbinden zu können, sind sie mittels einer Mutter 29 (siehe Figuren 3 und 4) an dem jeweiligen elektrischen Anschlussstecker 19 bzw. 20 gesichert. Hierzu weist jedes der elektrischen Anschlusskabel 16, 17 an seinem Ende eine gebogene Polplatte 30 mit einer Bohrung (hier nicht beziffert) auf. Die Polplatte 30 kann auf die elektrischen Anschlussstecker 19 oder 20 gesteckt und dort mittels der Mutter 29 gesichert werden. Mittels einer derart festen, aber lösbaren Steck-/Schraubverbindung können die elektrischen Anschlusskabel 16, 17 problemlos vor Ort montiert werden, so dass für einen vorausgehenden Transport eine Vielzahl an elektrischen Heizvorrichtungen 1, insbesondere an Regeleinrichtungen 7, wesentlich besser aufeinander gestapelt werden können, als hinsichtlich elektrischer Heizvorrichtungen 1 an denen elektrische Anschlusskabel 16, 17 permanent angelötet sind.

Nach der Darstellung der Figur 4 ist weiter gut zu erkennen, wie der erste elektrische Anschlussstecker 19 mit einer elektrischen Anschlussplatte 31 in Verbindung steht. Mittels der elektrischen Anschlussplatte 31 können elektrische Kontakte (hier nicht gezeigt) im Bereich der vorstehend erwähnten Kontaktschlitze 15 (siehe Figur 2) elektrisch angebunden werden. Über diese elektrischen Kontakte werden die Kontaktbleche (hier nicht gezeigt) der PTC-Heizelemente 2 mit Elektrizität versorgt.

Vorteilhafter Weise sind die elektrischen Anschlussmittel 18 an einer den elektrischen Heizelementen 3 zugewandten Seite 32 einer elektrischen Anschlussplatte 31 angeordnet, so dass die elektrischen Anschlussmittel 18 gut innerhalb der elektrischen Heizvorrichtung 1 integriert werden können und nicht nach Außen 23 über das Gehäuse 10 der Regeleinrichtung 7 hinaus ragen.

## Patentansprüche

1. Elektrische Vorrichtung (1) zum Heizen, insbesondere einer Fahrgastzelle eines Kraftfahrzeuges, mit elektrischen Heizelementen (3) und mit einer mit den elektrischen Heizelementen elektrisch verbundenen Regeleinrichtung (7), wobei die Regeleinrichtung (7) ein Gehäuse (10) und elektrische Anschlussmittel (18) zum Anschließen an eine Energiequelle aufweist, *dadurch gekenntzeichnet dass* die elektrischen Anschlussmittel (18) an einer den elektrischen Heizelementen (3) zugewandten Gehäuseseite (14) der Regeleinrichtung (7) angeordnet sind.

2. Heizvorrichtung (1) nach Anspruch 1, ***dadurch gekennzeichnet dass*** die elektrischen Anschlussmittel (18) an einer Gehäuseinnenseite (21) der elektrischen Heizvorrichtung (1) angeordnet sind.

3. Heizvorrichtung (1) nach Anspruch 1 oder 2, ***dadurch gekennzeichnet,* dass** die elektrischen Anschlussmittel (18) an einer den elektrischen Heizelementen (3) zugewandten Seite (32) einer elektrischen Anschlussplatte (31) angeordnet sind.

4. Heizvorrichtung (1) nach einem der vorhergehenden Ansprüche, ***dadurch gekennzeichnet, dass*** die elektrischen Anschlussmittel (18) elektrische Anschlusspole umfassen, welche auf die elektrischen Heizelemente (3) zugerichtet sind.

5. Heizvorrichtung (1) nach einem der vorhergehenden Ansprüche, ***dadurch gekennzeichnet dass*** die elektrischen Anschlussmittel (18) elektrische Anschlussstecker (19, 20) umfassen.

6. Heizvorrichtung (1) nach einem der vorhergehenden Ansprüche, ***dadurch gekennzeichnet, dass*** die elektrischen Anschlussmittel (18) Innerhalb einer Führungseinrichtung (11, 12) der Regeleinrichtung (7) angeordnet sind.

7. Heizvorrichtung (1) nach einem der vorhergehenden Ansprüche, ***dadurch gekennzeichnet, dass*** das Gehäuse (10) der Regeleinrichtung (7) einen radial zugänglichen Kabelkanal (24, 25) aufweist.

8. Heizvorrichtung (1) nach einem der vorhergehenden Ansprüche, *dadurch gekenntzeichnet dass* das Gehäuse (10) der Regeleinrichtung (7) eine Führungssehale (27, 28) für ein elektrisches Anschlusskabel (16, 17) aufweist.

9. Heizvorrichtung (1) nach einem der vorhergehenden Ansprüche, **dadurch *gekennzeichnet,* dass** die elektrischen Heizelemente (3) elektrische PTC-Elemente (2) umfassen.

## Claims

1. An electric device (1) for heating, in particular for heating an interior of a motor vehicle, comprising electric heating elements (3) and comprising a control arrangement (7) electrically connected to the electric heating elements, wherein the control arrangement (7) has a housing (10) and an electric connection means (18) for connection to an energy source, **characterised in that** the electric connection means (18) are arranged on a housing side (14) of the control arrangement (7) facing the electric heating elements (3).

2. The heating device (1) according to claim 1, **characterised in that** the electric connection means (18) are arranged on a housing inner side (21) of the electric heating device (1).

3. The heating device (1) according to claim 1 or 2, **characterised in that** the electric connection means (18) are arranged on a side (32) of an electric connection plate (31) facing the electric heating elements (3).

4. The heating device (1) according to one of the preceding claims, **characterised in that** the electric connection means (18) comprise electric connection poles that are directed towards the electric heating elements (3).

5. The heating device (1) according to one of the preceding claims, **characterised in that** the electric connection means (18) comprise electric connection plugs (19, 20).

6. The heating device (1) according to one of the preceding claims, **characterised in that** the electric connection means (18) are arranged within a guide arrangement (11, 12) of the control arrangement (7).

7. The heating device (1) according to one of the preceding claims, **characterised in that** the housing (10) of the control arrangement (7) has a radially accessible cable channel (24, 25).

8. The heating device (1) according to one of the preceding claims, **characterised in that** the housing (10) of the control arrangement (7) has a guide shell (27, 28) for an electric connection cable (16, 17).

9. The heating device (1) according to one of the preceding claims, **characterised in that** the electric heating elements (3) comprise electric PTC elements (2).

## Revendications

1. Dispositif électrique (1) servant au chauffage, en particulier d'un habitacle d'un véhicule automobile, comprenant des éléments chauffants électriques (3) et un dispositif de réglage (7) connecté électriquement aux éléments chauffants électriques, où le dispositif de réglage (7) présente un boîtier (10) et des moyens de connexion électrique (18) servant à se connecter à une source d'énergie, **caractérisé en ce que** les moyens de connexion électrique (18) sont disposés sur un côté (14) du boîtier du dispositif de réglage (7), ledit côté étant tourné vers les éléments chauffants électriques (3).

2. Dispositif de chauffage (1) selon la revendication 1, **caractérisé en ce que** les moyens de connexion électrique (18) sont disposés sur un côté intérieur (21) du boîtier du dispositif de chauffage électrique (1).

3. Dispositif de chauffage (1) selon la revendication 1 ou 2, **caractérisé en ce que** les moyens de connexion électrique (18) sont disposés sur un côté (32) d'une plaque de connexion électrique (31), ledit côté étant tourné vers les éléments chauffants électriques (3).

4. Dispositif de chauffage (1) selon l'une quelconque des revendications précédentes, **caractérisé en ce que** les moyens de connexion électrique (18) comprennent des pôles de connexion électrique qui sont pointés vers les éléments chauffants électriques (3).

5. Dispositif de chauffage (1) selon l'une quelconque des revendications précédentes, **caractérisé en ce que** les moyens de connexion électrique (18) comprennent des fiches de connexion électrique (19, 20).

6. Dispositif de chauffage (1) selon l'une quelconque des revendications précédentes, **caractérisé en ce que** les moyens de connexion électrique (18) sont disposés à l'intérieur d'un dispositif de guidage (11, 12) du dispositif de réglage (7).

7. Dispositif de chauffage (1) selon l'une quelconque des revendications précédentes, **caractérisé en ce que** le boîtier (10) du dispositif de réglage (7) présente un conduit de câble (24, 25) accessible radialement.

8. Dispositif de chauffage (1) selon l'une quelconque des revendications précédentes, **caractérisé en ce que** le boîtier (10) du dispositif de réglage (7) présente une coque de guidage (27, 28) pour un câble de connexion électrique (16, 17).

9. Dispositif de chauffage (1) selon l'une quelconque des revendications précédentes, **caractérisé en ce que** les éléments chauffants électriques (3) comprennent des éléments CTP électriques (2).
